# EUROPEAN PATENT SPECIFICATION

(11) **EP 4 238 434 B1**
(45) Date of publication and mention of the grant of the patent: **11.09.2024**
(21) Application number: 22159733.9
(22) Date of filing: 02.03.2022
(51) Int. Cl.: A24F 40/485, A24F 40/40, A24F 40/20, A24D 1/20

(54) **AEROSOL GENERATING DEVICE COMPRISING LEAKAGE PREVENTING MEANS AND ASSOCIATED AEROSOL GENERATING ASSEMBLY**
AEROSOLERZEUGUNGSVORRICHTUNG MIT LECKAGEVERHINDERUNGSMITTELN UND ZUGEHÖRIGE AEROSOLERZEUGUNGSANORDNUNG
DISPOSITIF DE GÉNÉRATION D'AÉROSOL COMPRENANT DES MOYENS DE PRÉVENTION DE FUITE ET ENSEMBLE DE GÉNÉRATION D'AÉROSOL ASSOCIÉ

(43) Date of publication of application: 06.09.2023
(73) Proprietor: JT International S.A., 1202 Geneva (CH)
(72) Inventor: WRIGHT, Alec, GUILDFORD, GU2 7SU (GB)
(74) Representative: Lavoix

(56) References cited:
- WO-A1-2016/033817
- WO-A1-2019/162507
- WO-A1-2020/239599
- WO-A1-2021/180967
- US-A1- 2017 164 657
- US-B2- 11 229 235

## Description

### FIELD OF THE INVENTION

The present invention concerns an aerosol generating device comprising leakage preventing means.

Particularly, the aerosol generating device according to the invention is configured to operate with a tobacco article, for example a flat-shaped tobacco article, which comprises for example a solid substrate able to form aerosol when being heated. Thus, such type of aerosol generating devices, also known as heat-not-burn devices, is adapted to heat, rather than burn, the substrate by conduction, convection and/or radiation, to generate aerosol for inhalation.

The present invention also concerns an aerosol generating assembly associated to such a device.

### BACKGROUND OF THE INVENTION

The popularity and use of reduced-risk or modified-risk devices (also known as vaporisers) has grown rapidly in the past few years as an aid to assist habitual smokers wishing to quit smoking traditional tobacco products such as cigarettes, cigars, cigarillos, and rolling tobacco. Various devices and systems are available that heat or warm vaporizable substances as opposed to burning tobacco in conventional tobacco products.

A commonly available reduced-risk or modified-risk device is the heated substrate aerosol generation device or heat-not-burn device. Devices of this type generate aerosol or vapour by heating an aerosol substrate that typically comprises moist leaf tobacco or other suitable vaporizable material to a temperature typically in the range 150°C to 350°C. Heating an aerosol substrate, but not combusting or burning it, releases aerosol that comprises the components sought by the user but not the toxic and carcinogenic byproducts of combustion and burning. Furthermore, the aerosol produced by heating the tobacco or other vaporizable material does not typically comprise the burnt or bitter taste resulting from combustion and burning that can be unpleasant for the user and so the substrate does not therefore require the sugars and other additives that are typically added to such materials to make the smoke and/or vapour more palatable for the user.

Tobacco articles, usable with such type of aerosol generating devices can take various forms. Some of them can present an elongated stick or any other suitable shape, like for example a flat shape. However, design of a tobacco article is often a trade-off between its aesthetics and efficiency in heating.

Some of known aerosol generating devices operating with solid tobacco substrates produce a high level of vapour in the substrate portion. In the current design, the vapour does not all go through the designed path including the mouthpiece portion of the article but instead can leak back up and out of the device, which reduces the overall vapour efficiency.

Document US 2017/164657 A1 discloses an aerosol generating device where a flat tobacco element is received in a cavity which engages with a mouthpiece, the latter having an air inlet which is in fluid communication with the distal end of the flat tobacco element.

### SUMMARY OF THE INVENTION

One of the aims of the invention is to provide an aerosol generating device with increased vapour efficiency.

For this purpose, the invention relates to an aerosol generating device configured to operate with a tobacco article comprising a substrate portion and a mouthpiece portion arranged successively along an article axis, the aerosol generating device comprising:
- a device body along a device axis from a fixing end, and comprising a heating chamber configured to receive the substrate portion of the tobacco article and defining an opening adjacent to the fixing end of the device body and a closed end opposite to the opening according to the device axis ;
- a mouthpiece fixed on the fixing end of the device body and forming an inner volume between this fixing end and an inner surface of the mouthpiece, the mouthpiece being configured to be engaged with the mouthpiece portion of the tobacco article and defining at least one airflow inlet on its internal surface in fluid communication with the closed end of the heating chamber.

According to the invention the The aerosol generating device further comprises leakage preventing means preventing flow leakage from the inner volume via the airflow inlet.

Thanks to these features, it is possible to avoid flow leakage from the inner volume of the mouthpiece and thus, increase the overall vapour efficiency of the device. Particularly, it was observed that in the devices defining an inner volume under the mouthpiece, a backward flow may be created during the user puffs and the flow can exist the device from the airflow inlet. The leakage preventing means according to the invention prevents such a situation and thus, improve the overall vapour efficiency of the device.

According to some embodiments, the leakage preventing means comprise a valve arranged in the airflow inlet.

According to some embodiments, the valve is configured to be opened while user puffs and closed in absence of user puffs.

Thanks to these features, it is possible to prevent in a simple and non-expensive way flow leakages from the airflow inlet. The valve forms thus a one-way fluidic valve which allows air entering into the device when the user takes a puff but prevents vapour from leaking back outwards.

According to some embodiments, the valve opens directly to the inner volume.

Thanks to these features, the airflow can be easily guided until the heating chamber. Additionally, in some cases, the entering airflow can be in contact with the tobacco article, for example with the mouthpiece portion of the tobacco article. This can cool down this mouthpiece portion and improve the user's perception of the inhaled flow.

According to some embodiments, the valve is a duck bill valve.

A duck bill valve is the preferred valve of choice as it can be made in a small size and is simple to implement. Other types like a conventional spring assisted check valve could also be used.

According to some embodiments, an airflow channel is formed between the airflow inlet and the closed end of the heating chamber, the airflow channel being formed by an upstream portion extending from the airflow inlet through the inner volume and a downstream portion extending from the upstream portion until the closed end of the heating chamber.

Thanks to these feature, air from the outside of the device can be guided until the closed end of the heating chamber. Then, air passes inside the tobacco article first in the substrate portion and then, in the mouthpiece portion. After the mouthpiece portion, the flow is inhaled directly by the user.

According to some embodiments, the downstream portion of the airflow channel extends outside or inside the heating chamber.

According to some embodiments, the downstream portion of the airflow channel extends along a lateral wall of the heating chamber.

When the downstream portion extends inside the heating chamber, it can extend from the opening until the closed end of the heating chamber. It can for example extend between a wall of the heating chamber and a wall of the tobacco article. For this purpose, the cross-section of the heating chamber may have at least one dimension which is greater than the corresponding dimension of the cross-section of the tobacco article.

When the downstream portion extends outside the heating chamber, it can extend along for example at least one wall of the heating chamber, such as a lateral wall (called also narrow wall in the specification) and open at the closed end of the heating chamber. This improves the amount of air pulled through the substrate portion decreasing the importance of the fit of the consumable in the heating chamber. This also gives a more consistent pressure drop from one tobacco article to another.

According to some embodiments, the leakage preventing means comprise a bypass channel forming the upstream portion of the airflow channel, the bypass channel being fluidically isolated from the inner volume.

Thanks to these features, it is possible to isolate the inner volume of the mouthpiece from the airflow inlet. Thus, a backward flow in the vicinity of the airflow inlet can be avoided. According to this embodiment, the airflow inlet can be provided with or without a valve as explained above. Particularly, when no valve is provided, a backward flow is avoided only due to the bypass channel. When a valve is provided, a backward flow is avoided using both elements, valve and bypass channel.

According to some embodiments, at least a portion of the bypass channel is delimited by a tube extending through the inner volume.

Thanks to these features, the bypass channel can be easily implemented in order to be isolated from the inner volume.

According to some embodiments, the mouthpiece defines at least two airflow inlets on its internal surface in fluid communication with the closed end of the heating chamber; the aerosol generating device comprising leakage preventing means for each airflow inlet.

Thanks to these features, it is possible to ensure a greater quantity of airflow passing through the tobacco article. The airflow inlets can be provided with the same leakage preventing means or with different leakage preventing means. For example, at least one airflow inlet can be provided with a valve as explained above and at least one airflow inlet can be provided with a bypass channel as explained above. According to another embodiment, each airflow inlet is provided with a valve as explained above or with a bypass channel as explained above.

According to some embodiments the mouthpiece defines a through hole configured to be engaged with the mouthpiece portion of the tobacco article.

Thanks to these features, the through hole can be adapted to tightly fit the tobacco article and thus to avoid or minimise flow leakage between the mouthpiece and the tobacco article. Additionally, the through hole can be adapted to maintain the tobacco article while for example its extraction from the device and/or insertion inside the device. Additionally, in some cases, the mouthpiece can also be adapted to maintain the tobacco article in the heating chamber with a distance from the heating walls. Thus, it is possible to ensure heating of the tobacco article by convection instead of conduction for example.

According to some embodiments, said airflow inlets are arranged on different sides of the through hole.

The airflow inlets can for example be arranged symmetrically in respect with the through-hole. Additionally, the leakage preventing means can also be arranged symmetrically in respect with the through-hole.

According to some embodiments, configured to operate with a flat-shaped tobacco article.

Thanks to these features, the tobacco article can be easily heated while being compact and easily handled by the user.

The invention also relates to an aerosol generating assembly comprising a tobacco article and an aerosol generating device as defined above, configured to operate with the tobacco article.

### BRIEF DESCRIPTION OF THE DRAWINGS

The invention and its advantages will be better understood upon reading the following description, which is given solely by way of non-limiting example and which is made with reference to the appended drawings, in which:
- Figure 1 is a perspective view of an aerosol generating assembly according to the invention, the aerosol generating assembly comprising an aerosol generating device according to the invention and a tobacco article usable with the aerosol generating device;
- Figure 2 is a perspective view of the tobacco article of Figure 1;
- Figure 3 is a partial cross-sectional view of the aerosol generating assembly of Figure 1 according to a longitudinal vertical plane of this Figure 1;
- Figure 4 is a partial cross-sectional view of the aerosol generating assembly of Figure 1 according to a longitudinal horizontal plane of this Figure 1, the aerosol generating device comprising leakage preventing means according to a first embodiment of the invention;
- Figure 5 is a detailed view illustrating the operation of the leakage preventing means of Figure 4; and
- Figure 6 is a partial cross-sectional view similar to the view of Figure 4, the aerosol generating device comprising leakage preventing means according to a second embodiment of the invention.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"aerosol generating device"** or **"device"** may include a vaping device to deliver an aerosol to a user, including an aerosol for vaping, by means of a heater element explained in further detail below. The device may be portable. "Portable" may refer to the device being for use when held by a user. The device may be adapted to generate a variable amount of aerosol, e.g. by activating the heater element for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation to enable a variable amount of vapour to be provided (so as to mimic the effect of smoking a conventional combustible smoking article such as a cigarette, cigar or pipe, etc.). The device may include a temperature regulation control to drive the temperature of the heater and/or the heated aerosol generating substance (aerosol pre-cursor) to a specified target temperature and thereafter to maintain the temperature at the target temperature that enables efficient generation of aerosol.

As used herein, the term **"aerosol"** may include a suspension of vaporizable material as one or more of: solid particles; liquid droplets; gas. Said suspension may be in a gas including air. Aerosol herein may generally refer to/include a vapour. Aerosol may include one or more components of the vaporizable material.

As used herein, the term **"vaporizable material"** or **"precursor"** may refer to a smokable material which may for example comprise nicotine or tobacco and an aerosol former. Tobacco may take the form of various materials such as shredded tobacco, granulated tobacco, tobacco leaf and/or reconstituted tobacco. Suitable aerosol formers include: a polyol such as sorbitol, glycerol, and glycols like propylene glycol or triethylene glycol; a non-polyol such as monohydric alcohols, acids such as lactic acid, glycerol derivatives, esters such as triacetin, triethylene glycol diacetate, triethyl citrate, glycerin or vegetable glycerin. In some embodiments, the aerosol generating agent may be glycerol, propylene glycol, or a mixture of glycerol and propylene glycol. The substrate may also comprise at least one of a gelling agent, a binding agent, a stabilizing agent, and a humectant.

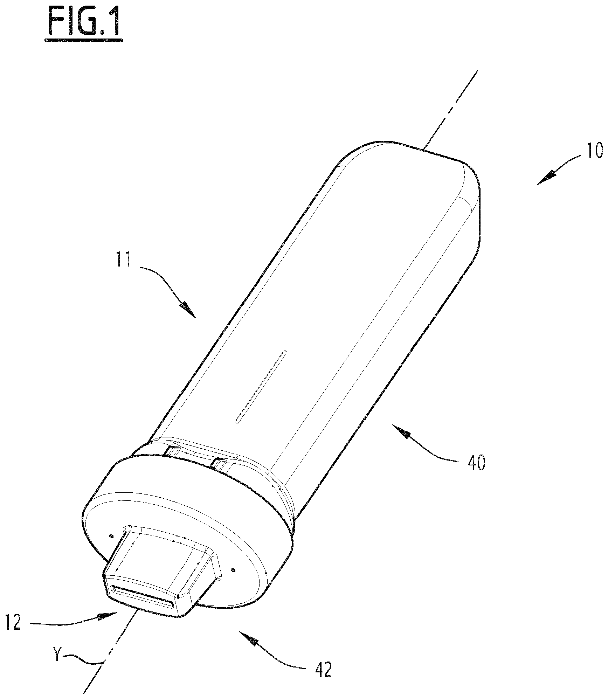

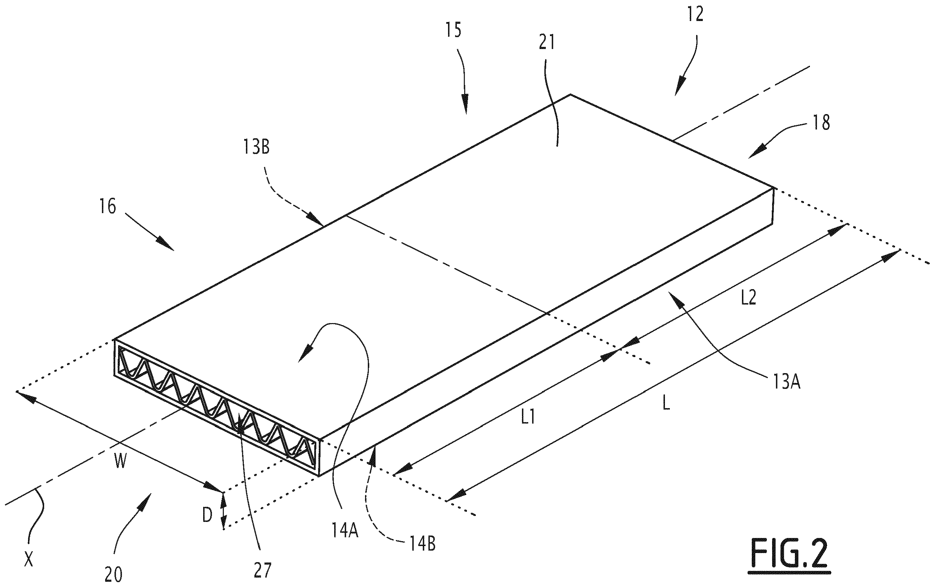

Figure 1 shows an aerosol generating assembly 10 comprising an aerosol generating device 11 and a tobacco article 12. The aerosol generating device 11 is intended to operate with the tobacco article 12 which is shown in more detail in Figures 2.

In the example of this Figure 2, the tobacco article 12 is a flat-shaped tobacco article presenting for example a flat-shaped cuboid extending along an article axis X and having external dimensions LxWxD. In a typical example, the length L of the article 12 according to the article axis X equals substantially to 33 mm while its width W and depth D are substantially equal respectively to 12 mm and 1,2 mm. According to different examples, the values L, W and D can be selected within a range of +/- 40%, for example. The depth D of the tobacco article 12 is formed by a pair of parallel walls 13A, 13B, called hereinafter narrow walls 13A, 13B, and the width W of the substrate is formed by a pair of parallel walls 14A, 14B, called hereinafter wide walls 14A, 14B. In some embodiments, the edges between the wide and narrow walls 13A, 13B, 14A, 14B can be rounded. According to other embodiments of the invention, the tobacco article 12 can have any other suitable flat shape and/or external dimensions. According to still other embodiments, the tobacco article 12 can present any other suitable shape, as for example a stick shape.

The tobacco article 12 comprises a substrate portion 15 and a mouthpiece portion 16 arranged along the article axis X. The substrate portion 15 may for example be slightly longer than the mouthpiece portion 16. For example, the length L2 of the substrate portion 15 according to the article axis X may be substantially equal to 18 mm and the length L1 of the mouthpiece portion 16 according to the article axis X may be substantially equal to 15 mm. The substrate portion 15 defines an abutting end 18 of the article 12 and the mouthpiece portion 16 defines a mouth end 20 of the article 12. The substrate portion 15 and the mouthpiece portion 16 may be fixed one to the other by a wrapper 21 extending around the substrate axis X. The wrapper 21 forms the narrow and wide walls 13A, 13B, 14A, 14B of the tobacco article 12. In some embodiments, the wrapper 21 is formed from a same wrapping sheet. In some other embodiments, the wrapper 21 is formed by separate wrapping sheets wrapping separately the portions 15, 16 and fixed one to the other by any other suitable mean. The wrapper 21 may, for example, comprise paper and/or non-woven fabric and/or aluminium foil. The wrapper 21 may be porous or air impermeable and forms a plurality of airflow channels extending inside the article 12 between the abutting end 18 and the mouth end 20.

The mouthpiece portion 16 comprises a core 27 intended to act for example as a cooler to cool slightly the vapour before it is inhaled by the user. The core 27 may comprise for this purpose for example corrugated paper. The core 27 may be formed through an extrusion and/or rolling process into a stable shape. Advantageously, the core 27 is arranged inside the mouthpiece portion 16 to be entirely in contact with the internal surface of the wrapper 21 delimiting this mouthpiece portion 16.

The substrate portion 15 comprises a vaporizable material and is intended to be heated by a heating chamber, as it will be explained in further detail below.

Referring again to Figure 1, the aerosol generating device 11 comprises a device body 40 extending along a device axis Y and a mouthpiece 42. According to the example described below, the mouthpiece 42 and the device body 40 form two different pieces. Particularly, according to this example, the mouthpiece 42 is designed to be fixed on a fixing end of the device body 40.

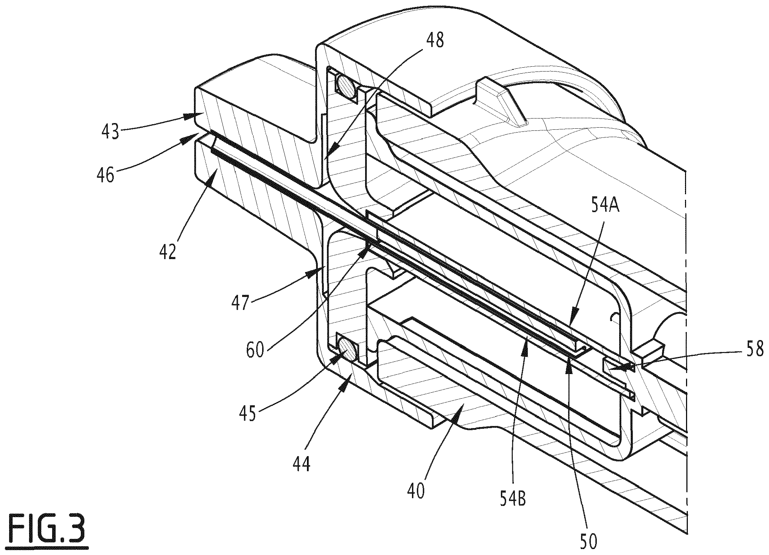

As it is shown in Figure 3, the mouthpiece 42 comprises a central part 43 and a peripheral part 44 extending around the central part 43. The peripheral part 44 defines for example a collar covering partially an external surface of the device body 40 when the mouthpiece 42 is fixed on the fixing end of the device body 40. For example, the peripheral part 44 can be designed to cooperate with a gasket 45 arranged on the fixing end of the device body 40 in order to seal the space formed between the peripheral part 44 and the external surface of the device body 40. The peripheral part 44 also defines an intermediate portion extending for example transversally to the device axis Y et forming a transition between the central part 43 of the mouthpiece 42 and the collar defined by the peripheral part 44. The central part 43 of the mouthpiece 42 defines a through hole 46 adapted to receive at least partially the tobacco article 12. Particularly, the through hole 46 can be adapted to receive at least a part of the mouthpiece portion 16 of the tobacco article 12 as it is shown in Figure 3. Advantageously, the through hole 46 can be adapted to fit tightly the mouthpiece portion 16 of the tobacco article 12 so as to avoid or minimise flow leakage between a wall delimiting the through hole 46 and an external surface of the tobacco article 12. In some embodiments, the tobacco article 12 can be retained for example by friction in the through hole 46. In this case, it is possible for example to insert first the mouthpiece portion 16 of the tobacco article 12 inside the through hole 46 and when fix both elements on the fixing end of the device body 40.

As it is also shown in Figure 3, an inner volume 47 is formed between an inner surface 48 of the mouthpiece 42 and the fixing end of the device body 40. This inner volume 47 is crossed by the tobacco article 12 when it is inserted inside the device body 40. For example, the tobacco article 12 can divide the inner volume 47 in two symmetric parts.

The device body 40 delimits an internal space of the device 11 receiving various elements designed to carry out different functionalities of the device 11. This internal space can for example receive a battery for powering the device 11, a control module for controlling the operation of the device 11, a heating chamber 50 for heating the substrate portion 15 of the tobacco article 12, etc. Among these elements, only the heating chamber 50 will be explained in further detail in reference to Figure 3.

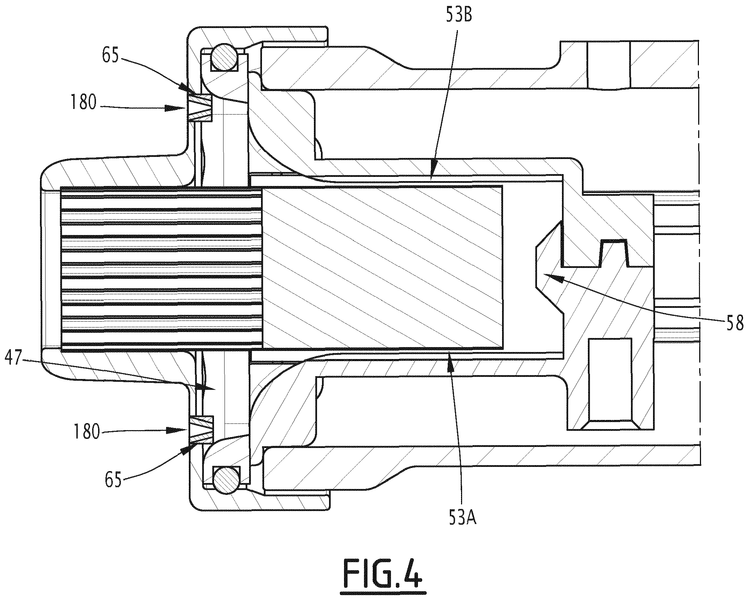

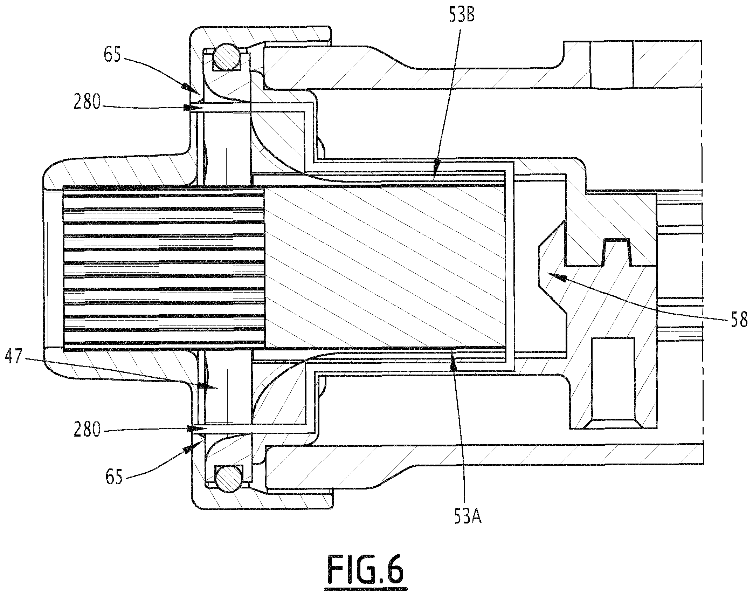

Particularly, as it is shown in this Figure 3, the heating chamber 50 can form a cup shape adapted to receive at least the substrate portion 15 of the tobacco article 12 and in some cases, at least a part of the mouthpiece portion 16. As the tobacco article 12, the heating chamber 50 may also form a cuboid shape extending along the device axis Y and comprising a pair of parallel narrow walls 53A, 53B (shown in Figures 4 and 6) extending along the device axis Y, a pair of parallel wide walls 54A, 54B extending also along the device axis Y and a bottom wall 58 adjacent to each of said walls and extending perpendicularly to the device axis Y. The bottom wall 58 forms thus a closed end of the chamber 50. Opposite to the bottom wall 58, the heating chamber 50 defines an opening 60 configured to receive the tobacco article 12 so as the corresponding wide walls 14A, 14B of the tobacco article 12 face the corresponding wide walls 54A, 54B of the heating chamber 50, the corresponding narrow walls 13A, 13B of the tobacco article 12 face the corresponding narrow walls 53A, 53B of the heating chamber 50 and the abutting end 18 of the tobacco article 12 abuts against the bottom wall 58 or at least a rib extending from this bottom wall 58. Alternatively, the abutting end 18 faces the bottom wall 58 without being in contact with it. The heating chamber 50 is thus configured to receive the tobacco article 12 so as the narrow wall 13A (respectfully 13B) of the tobacco article 12 faces the narrow wall 53B (respectfully 53A) of the heating chamber 50, and the wide wall 14A (respectfully 14B) of the tobacco article 12 faces the wide wall 54B (respectfully 54A) of the heating chamber 50. The facing wide walls 14A, 14B, 54A, 54B and the facing narrow walls 13A, 13B, 53A, 53B can be in contact one with the other or spaced one from the other.

The heating chamber 50 further comprises one or several heating elements (not-shown) arranged to heat the substrate portion 15 of the tobacco article 12. According to different embodiments of the invention, the or each heating element can present for example a restive element arranged adjacent to at least one of the walls 53A, 53B, 54A, 54B of the heating chamber 50. Advantageously, a resistive heating element, as for example a heating track or a polyimide film heater, is arranged adjacent to each wide wall 54A, 54B of the heating chamber 50, for example on an external surface of such a wall. According to other embodiments of the invention, the or each heating element presents any other suitable mean, as for example a heating blade penetrating the substrate portion 15 of the tobacco article 12. According to still another embodiment, the or each heating element presents a magnetic element able to cause heating of a plurality of susceptors comprised in the substrate portion 15 by magnetic induction.

In order to ensure user's puffs, an airflow channel extending from an airflow inlet 65 (shown in Figures 4 and 6) until the closed end of the heating chamber 50 is formed inside the aerosol generating device 11. Thus, air can enter the heating chamber 50 through the airflow channel and pass first to the substrate portion 15 and then through the mouthpiece portion 16 of the tobacco article 12 before being delivered to the user. According to the invention, the airflow inlet 65 is arranged in the mouthpiece 42, advantageously in the intermediate portion of the peripheral part 44 of this mouthpiece 42. The airflow inlet 65 can be formed by a through hole.

The airflow channel is formed by an upstream portion extending from the airflow inlet 65 and a downstream portion extending from the upstream portion until the closed end of the heating chamber 50. According to different embodiments of the invention, the downstream portion may extend inside or outside the heating chamber 50. For example, according to one embodiment, the downstream portion extends inside the heating chamber 50 from its opening 60 until the closed end. In this case, the downstream portion can be formed between a narrow wall 13A, 13B of the tobacco article 12 and the corresponding narrow wall 53A, 53B of the heating chamber 50. According to another embodiment, the downstream portion extends outside the heating chamber through for example a dedicated channel extending along a narrow wall 53A, 53B of the heating chamber 50. In this case, the downstream portion opens to the closed end of the heating chamber 50. The arrangement of the upstream portion depends on different embodiments of the invention explained in further detail below.

In some embodiments, several airflow channels can be formed inside the aerosol generating device 11, each of these channels being similar to the channel described above. For example, these channels can be arranged symmetrically in respect with the through hole 46 of the mouthpiece 42. In the example of the Figures, two airflow channels are arranged symmetrically in respect with the through hole 46.

According to the invention, the aerosol generating device 11 further comprises leakage preventing means 180, 280 preventing flow leakage from the inner volume 47. The implementation of these leakage preventing means 180, 280 depends on different embodiments of the invention explained in further detail below.

### FIRST EMBODIMENT

The leakage preventing means 180 according to the first embodiment of the invention will now be explained in reference to Figure 4.

According to this embodiment, the leakage preventing means 180 comprise a valve arranged in the or each airflow inlet 65. Additionally, according to this embodiment, the or each airflow inlet 65 opens directly to the inner volume 47. Thus, in this case, the upstream portion of the corresponding airflow channel extends through this inner volume 47, for example without being delimited inside this volume.

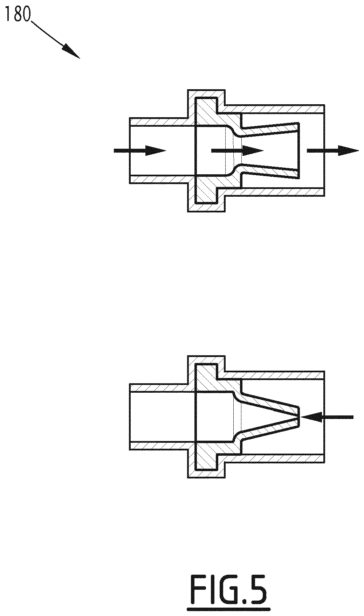

An example of a valve forming the leakage preventing means 180 is shown in Figure 5. According to this example, the valve is a duck bill valve configured to be opened while user puffs (configuration shown in the up part of the Figure) and closed in absence of user puffs (configuration shown in the down part of the Figure). In other words, the valve is configured to be opened upon an airflow occurring from the outside of the device 11 to the inside and closed otherwise.

### SECOND EMBODIMENT

The leakage preventing means 280 according to the second embodiment of the invention will now be explained in reference to Figure 6.

According to this embodiment, the leakage preventing means 280 comprise a bypass channel extending from the or airflow inlet 60 through the inner volume 47 while being fluidically isolated from the inner volume 47. The bypass channel forms thus the upstream portion of the corresponding airflow channel. In the preferred embodiment, in this case, the downstream portion of the corresponding airflow channel extends outside the heating chamber 50.

According to some examples of the second embodiment, the bypass channel 280 is delimited by a tube extending through the inner volume 47. According to other examples, the bypass channel 280 is at least partially formed by one or several surfaces delimiting the inner volume 47.

The second embodiment can be combined with the first embodiment. In this case, at least one airflow channel can be associated simultaneously with a valve and a bypass channel. According to another example, at least one airflow channel can be associated with a valve and at least one other airflow channel can be associated with a bypass channel.

## Claims

1. An aerosol generating device (11) configured to operate with a tobacco article (12) comprising a substrate portion (15) and a mouthpiece portion (16) arranged successively along an article axis (X), the aerosol generating device (11) comprising:
- a device body (40) extending along a device axis (Y) from a fixing end, and comprising a heating chamber (50) configured to receive the substrate portion (15) of the tobacco article (12) and defining an opening (60) adjacent to the fixing end of the device body (40) and a closed end opposite to the opening (60) according to the device axis (Y);
- a mouthpiece (42) fixed on the fixing end of the device body (40) and forming an inner volume (47) between this fixing end and an inner surface (48) of the mouthpiece (42), the mouthpiece (42) being configured to be engaged with the mouthpiece portion (16) of the tobacco article (12) and defining at least one airflow inlet (65) on its internal surface (48) in fluid communication with the closed end of the heating chamber (50);
the aerosol generating device (11) being **characterized in that** it further comprises leakage preventing means (180; 280) preventing flow leakage from the inner volume (47) via the airflow inlet (65).

2. The aerosol generating device (11) according to claim 1, the leakage preventing means (180) comprise a valve arranged in the airflow inlet (65).

3. The aerosol generating device (11) according to claim 2, wherein the valve (180) is configured to be opened while user puffs and closed in absence of user puffs.

4. The aerosol generating device (11) according to claim 2 or 3, wherein the valve (180) opens directly to the inner volume (47).

5. The aerosol generating device (11) according to any one of claims 2 to 4, wherein the valve (180) is a duck bill valve.

6. The aerosol generating device (11) according to any one of the preceding claims, wherein an airflow channel is formed between the airflow inlet (65) and the closed end of the heating chamber (50), the airflow channel being formed by an upstream portion extending from the airflow inlet (65) through the inner volume (47) and a downstream portion extending from the upstream portion until the closed end of the heating chamber (50).

7. The aerosol generating device (11) according to claim 6, wherein the downstream portion of the airflow channel extends outside or inside the heating chamber (50).

8. The aerosol generating device (11) according to claim 6 or 7, wherein the downstream portion of the airflow channel extends along a lateral wall of the heating chamber (50).

9. The aerosol generating device (11) according to any one of claims 6 to 8, wherein the leakage preventing means (280) comprise a bypass channel forming the upstream portion of the airflow channel, the bypass channel being fluidically isolated from the inner volume (47).

10. The aerosol generating device (11) according to claim 9, wherein at least a portion of the bypass channel (280) is delimited by a tube extending through the inner volume (47).

11. The aerosol generating device (11) according to any one of the preceding claims, wherein the mouthpiece (42) defines at least two airflow inlets (65) on its internal surface (48) in fluid communication with the closed end of the heating chamber (50);
the aerosol generating device (11) comprising leakage preventing means (180; 280) for each airflow inlet.

12. The aerosol generating device (11) according to any one of the preceding claims, wherein the mouthpiece (42) defines a through hole (46) configured to be engaged with the mouthpiece portion (16) of the tobacco article (12).

13. The aerosol generating device (11) according to claims 11 and 12, wherein said airflow inlets (65) are arranged on different sides of the through hole (46).

14. The aerosol generating device (11) according to any one of the preceding claims, configured to operate with a flat-shaped tobacco article (12).

15. An aerosol generating assembly (10) comprising a tobacco article (12) and an aerosol generating device (11) according to any one of the preceding claims, configured to operate with the tobacco article (12).

## Patentansprüche

1. Aerosolerzeugungsvorrichtung (11), die so konfiguriert ist, dass sie mit einem Tabakartikel (12) arbeitet, der einen Substratabschnitt (15) und ein Mundstückteil (16) umfasst, die nacheinander entlang einer Artikelachse (X) angeordnet sind, wobei die Aerosolerzeugungsvorrichtung (11) umfasst:
- einen Vorrichtungskörper (40), der sich entlang einer Vorrichtungsachse (Y) von einem Befestigungsende aus erstreckt und eine Heizkammer (50) umfasst, die so konfiguriert ist, dass sie den Substratabschnitt (15) des Tabakartikels (12) aufnimmt und eine Öffnung (60) angrenzend an das Befestigungsende des Vorrichtungskörpers (40) und ein geschlossenes Ende gegenüber der Öffnung (60) gemäß der Vorrichtungsachse (Y) definiert;
- ein Mundstück (42), das am Befestigungsende des Vorrichtungskörpers (40) befestigt ist und ein Innenvolumen (47) zwischen diesem Befestigungsende und einer Innenfläche (48) des Mundstücks (42) bildet, wobei das Mundstück (42) so konfiguriert ist, dass es mit dem Mundstückteil (16) des Tabakartikels (12) in Eingriff gebracht werden kann, und mindestens einen Luftstromeinlass (65) auf seiner Innenfläche (48) in Fluidverbindung mit dem geschlossenen Ende der Heizkammer (50) definiert;
wobei die Aerosolerzeugungsvorrichtung (11) **dadurch gekennzeichnet ist, dass** sie ferner Leckageverhinderungsmittel (180; 280) umfasst, die ein Austreten des Stroms aus dem Innenvolumen (47) über den Luftstromeinlass (65) verhindern.

2. Aerosolerzeugungsvorrichtung (11) nach Anspruch 1, wobei die Leckageverhinderungsmittel (180) ein im Luftstromeinlass (65) angeordnetes Ventil umfassen.

3. Aerosolerzeugungsvorrichtung (11) nach Anspruch 2, wobei das Ventil (180) so konfiguriert ist, dass es geöffnet wird, während der Benutzer pustet, und geschlossen wird, wenn der Benutzer nicht pustet.

4. Aerosolerzeugungsvorrichtung (11) nach Anspruch 2 oder 3, wobei sich das Ventil (180) direkt zum Innenvolumen (47) öffnet.

5. Die Aerosolerzeugungsvorrichtung (11) nach einem der Ansprüche 2 bis 4, wobei das Ventil (180) ein Entenschnabelventil ist.

6. Aerosolerzeugungsvorrichtung (11) nach einem der vorhergehenden Ansprüche, wobei zwischen dem Luftstromeinlass (65) und dem geschlossenen Ende der Heizkammer (50) ein Luftstromkanal gebildet wird, wobei der Luftstromkanal durch einen stromaufwärts gelegenen Abschnitt, der sich vom Luftstromeinlass (65) durch das Innenvolumen (47) erstreckt, und einen stromabwärts gelegenen Abschnitt, der sich vom stromaufwärts gelegenen Abschnitt bis zum geschlossenen Ende der Heizkammer (50) erstreckt, gebildet wird.

7. Aerosolerzeugungsvorrichtung (11) nach Anspruch 6, wobei sich der stromabwärts gelegene Abschnitt des Luftstromkanals außerhalb oder innerhalb der Heizkammer (50) erstreckt.

8. Aerosolerzeugungsvorrichtung (11) nach Anspruch 6 oder 7, wobei sich der stromabwärts gelegene Abschnitt des Luftstromkanals entlang einer Seitenwand der Heizkammer (50) erstreckt.

9. Aerosolerzeugungsvorrichtung (11) nach einem der Ansprüche 6 bis 8, wobei die Leckageverhinderungsmittel (280) einen Bypass-Kanal umfassen, der den stromaufwärts gelegenen Teil des Luftstromkanals bildet, wobei der Bypass-Kanal fluidisch vom Innenvolumen (47) isoliert ist.

10. Aerosolerzeugungsvorrichtung (11) nach Anspruch 9, wobei zumindest ein Teil des Bypasskanals (280) durch ein Rohr begrenzt ist, das sich durch das Innenvolumen (47) erstreckt.

11. Die Aerosolerzeugungsvorrichtung (11) nach einem der vorhergehenden Ansprüche, wobei das Mundstück (42) mindestens zwei Luftstromeinlässe (65) auf seiner Innenfläche (48) in Fluidverbindung mit dem geschlossenen Ende der Heizkammer (50) definiert;
die Aerosolerzeugungsvorrichtung (11) Leckageverhinderungsmittel (180; 280) für jeden Luftstromeinlass umfasst.

12. Die Aerosolerzeugungsvorrichtung (11) nach einem der vorhergehenden Ansprüche, wobei das Mundstück (42) ein Durchgangsloch (46) definiert, das so konfiguriert ist, dass es mit dem Mundstückteil (16) des Tabakartikels (12) in Eingriff gebracht werden kann.

13. Aerosolerzeugungsvorrichtung (11) nach einem der Ansprüche 11 und 12, wobei die Luftstromeinlässe (65) auf verschiedenen Seiten des Durchgangslochs (46) angeordnet sind.

14. Die Aerosolerzeugungsvorrichtung (11) nach einem der vorhergehenden Ansprüche, die für den Betrieb mit einem flach geformten Tabakartikel (12) konfiguriert ist.

15. Aerosolerzeugungsanordnung (10), die einen Tabakartikel (12) und eine Aerosolerzeugungsvorrichtung (11) nach einem der vorhergehenden Ansprüche umfasst, die so konfiguriert ist, dass sie mit dem Tabakartikel (12) arbeitet.

## Revendications

1. Dispositif de génération d'aérosol (11) configuré pour fonctionner avec un article de tabac (12) comprenant une partie de substrat (15) et une partie d'embout buccal (16) disposées successivement le long d'un axe d'article (X), le dispositif de génération d'aérosol (11) comprenant :
- un corps de dispositif (40) s'étendant le long d'un axe de dispositif (Y) à partir d'une extrémité de fixation, et comprenant une chambre de chauffe (50) configurée pour recevoir la partie de substrat (15) de l'article de tabac (12) et définissant une ouverture (60) adjacente à l'extrémité de fixation du corps de dispositif (40) et une extrémité fermée opposée à l'ouverture (60) selon l'axe de dispositif (Y) ;
- un embout buccal (42) fixé sur l'extrémité de fixation du corps de dispositif (40) et formant un volume intérieur (47) entre cette extrémité de fixation et une surface intérieure (48) de l'embout buccal (42), l'embout buccal (42) étant configuré pour être en prise avec la partie d'embout buccal (16) de l'article de tabac (12) et définissant au moins une entrée de flux d'air (65) sur sa surface interne (48) en communication fluidique avec l'extrémité fermée de la chambre de chauffe (50) ;
le dispositif de génération d'aérosol (11) étant **caractérisé en ce qu'**il comprend en outre des moyens de prévention des fuites (180 ; 280) empêchant les fuites de flux du volume intérieur (47) via l'entrée de flux d'air (65).

2. Dispositif de génération d'aérosol (11) selon la revendication 1, les moyens de prévention des fuites (180) comprennent une valve disposée dans l'entrée de flux d'air (65).

3. Dispositif de génération d'aérosol (11) selon la revendication 2, dans lequel la valve (180) est configurée pour être ouverte pendant que l'utilisateur tire une bouffée et fermée en l'absence de bouffées de l'utilisateur.

4. Dispositif de génération d'aérosol (11) selon la revendication 2 ou 3, dans lequel la valve (180) s'ouvre directement sur le volume intérieur (47).

5. Dispositif de génération d'aérosol (11) selon l'une quelconque des revendications 2 à 4, dans lequel la valve (180) est une valve à bec de canard.

6. Dispositif de génération d'aérosol (11) selon l'une quelconque des revendications précédentes, dans lequel un canal de flux d'air est formé entre l'entrée de flux d'air (65) et l'extrémité fermée de la chambre de chauffe (50), le canal de flux d'air étant formé d'une partie amont s'étendant à partir de l'entrée de flux d'air (65) à travers le volume intérieur (47) et d'une partie aval s'étendant à partir de la partie amont jusqu'à l'extrémité fermée de la chambre de chauffe (50).

7. Dispositif de génération d'aérosol (11) selon la revendication 6, dans lequel la partie aval du canal de flux d'air s'étend à l'extérieur ou à l'intérieur de la chambre de chauffe (50).

8. Dispositif de génération d'aérosol (11) selon la revendication 6 ou 7, dans lequel la partie aval du canal de flux d'air s'étend le long d'une paroi latérale de la chambre de chauffe (50).

9. Dispositif de génération d'aérosol (11) selon l'une quelconque des revendications 6 à 8, dans lequel les moyens de prévention des fuites (280) comprennent un canal de dérivation formant la partie amont du canal de flux d'air, le canal de dérivation étant isolé fluidiquement du volume intérieur (47).

10. Dispositif de génération d'aérosol (11) selon la revendication 9, dans lequel au moins une partie du canal de dérivation (280) est délimitée par un tube s'étendant à travers le volume intérieur (47).

11. Dispositif de génération d'aérosol (11) selon l'une quelconque des revendications précédentes, dans lequel l'embout buccal (42) définit au moins deux entrées de flux d'air (65) sur sa surface interne (48) en communication fluidique avec l'extrémité fermée de la chambre de chauffe (50) ;
le dispositif de génération d'aérosol (11) comprenant des moyens de prévention des fuites (180 ; 280) pour chaque entrée de flux d'air.

12. Dispositif de génération d'aérosol (11) selon l'une quelconque des revendications précédentes, dans lequel l'embout buccal (42) définit un trou traversant (46) configuré pour être en prise avec la partie d'embout buccal (16) de l'article de tabac (12).

13. Dispositif de génération d'aérosol (11) selon les revendications 11 et 12, dans lequel lesdites entrées de flux d'air (65) sont disposées sur différents côtés du trou traversant (46).

14. Dispositif de génération d'aérosol (11) selon l'une quelconque des revendications précédentes, configuré pour fonctionner avec un article de tabac (12) de forme plate.

15. Ensemble de génération d'aérosol (10) comprenant un article de tabac (12) et un dispositif de génération d'aérosol (11) selon l'une quelconque des revendications précédentes, configuré pour fonctionner avec l'article de tabac (12).
